# EUROPEAN PATENT SPECIFICATION

(11) **EP 3 131 352 B1**
(45) Date of publication and mention of the grant of the patent: **31.10.2018**
(21) Application number: 16181159.1
(22) Date of filing: 26.07.2016
(51) Int. Cl.: H04W 72/02, H04W 72/10, H04W 72/12, H04W 4/00

(54) **METHOD FOR PERFORMING A LOGICAL CHANNEL PRIORITIZATION IN A D2D COMMUNICATION SYSTEM AND DEVICE THEREFOR**
VERFAHREN ZUR DURCHFÜHRUNG EINER LOGISCHEN KANALPRIORISIERUNG IN EINEM D2D-KOMMUNIKATIONSSYSTEM UND VORRICHTUNG DAFÜR
PROCÉDÉ DESTINÉ À RÉALISER UNE PRIORITÉ DE CANAL LOGIQUE DANS UN SYSTÈME DE COMMUNICATION DE DISPOSITIF À DISPOSITIF (D2D) ET DISPOSITIF ASSOCIÉ

(30) Priority: 12.08.2015 US 201562204421 P
(43) Date of publication of application: 15.02.2017
(73) Proprietor: LG ELECTRONICS INC., Yeongdeungpo-gu Seoul 07336 (KR)
(72) Inventor: YI, Seungjune, 06772 Seoul (KR); LEE, Sunyoung, 06772 Seoul (KR)
(74) Representative: Katérle, Axel

(56) References cited:
- PANASONIC: "Logical channel prioritization procedure for ProSe communication", 3GPP DRAFT; R2-151160, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20150420 - 20150424 19 April 2015 (2015-04-19), XP050936136, Retrieved from the Internet: URL:http://www.3gpp.org/ftp/Meetings_3GPP_ SYNC/RAN2/Docs/ [retrieved on 2015-04-19]
- INTERDIGITAL COMMUNICATIONS: "Group Priorities for ProSe Communications", 3GPP DRAFT; CONTRIBUTION ON 7.5.4 ON GROUP PRIORITIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20150525 - 20150529 24 May 2015 (2015-05-24), XP050972391, Retrieved from the Internet: URL:http://www.3gpp.org/ftp/Meetings_3GPP_ SYNC/RAN2/Docs/ [retrieved on 2015-05-24]
- ERICSSON: "ProSe communication and Group priority", 3GPP DRAFT; R2-145137 - PROSE COMMUNICATION AND PRIORITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20141117 - 20141121 17 November 2014 (2014-11-17), XP050877245, Retrieved from the Internet: URL:http://www.3gpp.org/ftp/Meetings_3GPP_ SYNC/RAN2/Docs/ [retrieved on 2014-11-17]
- QUALCOMM INCORPORATED: "ProSe QoS", 3GPP DRAFT; S2-150893-PROSE-QOS-R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose Del Cabo, Mexico; 20150413 - 20150417 13 April 2015 (2015-04-13), XP050942774, Retrieved from the Internet: URL:http://www.3gpp.org/ftp/Meetings_3GPP_ SYNC/SA2/Docs/ [retrieved on 2015-04-13]

## Description

### [Technical Field]

The present disclosure relates to a wireless communication system and, more particularly, to a method for performing a Logical Channel Prioritization in a D2D (Device to Device) communication system and a device therefor.

### [Background Art]

As an example of a mobile communication system to which the present invention is applicable, a 3rd Generation Partnership Project Long Term Evolution (hereinafter, referred to as LTE) communication system is described in brief.

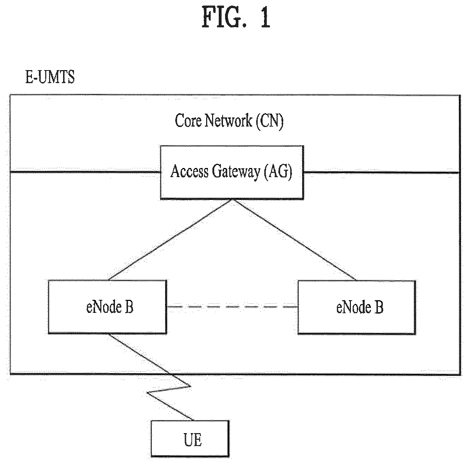

FIG. 1 is a view schematically illustrating a network structure of an E-UMTS as an exemplary radio communication system. An Evolved Universal Mobile Telecommunications System (E-UMTS) is an advanced version of a conventional Universal Mobile Telecommunications System (UMTS) and basic standardization thereof is currently underway in the 3GPP. E-UMTS may be generally referred to as a Long Term Evolution (LTE) system. Details of the technical specifications of UMTS and E-UMTS are provided in Release 7 and Release 8 of "3rd Generation Partnership Project; Technical Specification Group Radio Access Network", for example.

Referring to FIG. 1, the E-UMTS includes a User Equipment (UE), eNode Bs (eNBs), and an Access Gateway (AG) which is located at an end of the network (E-UTRAN) and connected to an external network. The eNBs may simultaneously transmit multiple data streams for a broadcast service, a multicast service, and/or a unicast service.

One or more cells may exist per eNB. The cell is set to operate in one of bandwidths such as 1.25, 2.5, 5, 10, 15, and 20 MHz and provides a downlink (DL) or uplink (UL) transmission service to a plurality of UEs in the bandwidth. Different cells may be set to provide different bandwidths. The eNB controls data transmission or reception to and from a plurality of UEs. The eNB transmits DL scheduling information of DL data to a corresponding UE so as to inform the UE of a time/frequency domain in which the DL data is supposed to be transmitted, coding, a data size, and hybrid automatic repeat and request (HARQ)-related information. In addition, the eNB transmits UL scheduling information of UL data to a corresponding UE so as to inform the UE of a time/frequency domain which may be used by the UE, coding, a data size, and HARQ-related information. An interface for transmitting user traffic or control traffic may be used between eNBs. A core network (CN) may include the AG and a network node or the like for user registration of UEs. The AG manages the mobility of a UE on a tracking area (TA) basis. One TA includes a plurality of cells.

Device to device (D2D) communication refers to the distributed communication technology that directly transfers traffic between adjacent nodes without using infrastructure such as a base station. In a D2D communication environment, each node such as a portable terminal discovers user equipment physically adjacent thereto and transmits traffic after setting communication session. In this way, since D2D communication may solve traffic overload by distributing traffic concentrated into the base station, the D2D communication may have received attention as the element technology of the next generation mobile communication technology after 4G. For this reason, standard institutes such as 3GPP or IEEE have proceeded to establish a D2D communication standard on the basis of LTE-A or Wi-Fi, and Qualcomm has developed their own D2D communication technology.
It is expected that D2D communication contributes to increase throughput of a mobile communication system and create new communication services. Also, D2D communication may support proximity based social network services or network game services. The problem of link of a user equipment located at a shade zone may be solved by using a D2D link as a relay. In this way, it is expected that the D2D technology will provide new services in various fields.
D2D communication technologies such as infrared communication, ZigBee, radio frequency identification (RFID) and near field communications (NFC) based on the RFID have been already used. However, since these technologies support communication only of a specific object within a limited distance (about 1m), it is difficult for the conventional technologies to be strictly regarded as D2D communication technologies.
Although D2D communication has been described as above, details of a method for transmitting data from a plurality of D2D user equipments with the same resource have not been suggested.
Document (PANASONIC: "Logical channel prioritization procedure for ProSe communication", 3GPP DRAFT; R2-151160, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Bratislava, Slovakia; 20150420-20150424 19 April 2015, XP050936136) outlines a prioritization mechanism for ProSe communication including Tx resource pool selection for the UE autonomous resource allocation mode. In the document it is proposed that group priorities associated to a ProSe destination group be introduced and provided to UE and eNB.
Document (INTERDIGITAL COMMUNICATIONS: "Group Priorities for ProSe Communications", 3GPP DRAFT; CONTRIBUTION ON 7.5.4 ON GROUP PRIORITIES, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Fukuoka, Japan; 20150525-20150529 24 May 2015, XP050972391) outlines group priority for ProSe communication. The document mainly describes whether priority should be assigned by the application layer to each packet to be transmitted by the access stratum, or whether the access stratum should first prioritized transmissions based on destination group first. Document (ERICSSON: "ProSe communication and Group priority", 3GPP DRAFT; R2-145137-PROSE COMMUNICATION AND PRIORITY, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. San Francisco, USA; 20141117-20141121 17 November 2014, XP050877245) outlines supporting prioritization for one-to many ProSe communication. The document describes association the ProSe group ID with a priority level, providing information on the group priority to the UE and eNB, and the number of group priority levels to be supported.

### [Technical Problem]

An object of the present invention devised to solve the problem lies in a method and device for a method for performing a Logical Channel Prioritization in a D2D communication system. The technical problems solved by the present invention are not limited to the above technical problems and those skilled in the art may understand other technical problems from the following description.

### [Technical Solution]

The object of the present invention can be achieved by providing a method for User Equipment (UE) operating in a wireless communication system as set forth in the appended claims.
In another aspect of the present invention, provided herein is a communication apparatus as set forth in the appended claims.
It is to be understood that both the foregoing general description and the following detailed description of the present invention are exemplary and explanatory and are intended to provide further explanation of the invention as claimed.

### [Advantageous Effects]

According to the present invention, when a MAC entity generates a MAC PDU, the MAC entity selects a ProSe Destination which includes a SL-LoCH having the highest SL-LoCH Priority and performs LCP procedure for the all SL-LoCHs belonging to the selected ProSe Destination.

It will be appreciated by persons skilled in the art that that the effects achieved by the present invention are not limited to what has been particularly described hereinabove and other advantages of the present invention will be more clearly understood from the following detailed description taken in conjunction with the accompanying drawings.

### [Description of Drawings]

The accompanying drawings, which are included to provide a further understanding of the invention, illustrate embodiment(s) of the invention and together with the description serve to explain the principle of the invention.
FIG. 1 is a diagram showing a network structure of an Evolved Universal Mobile Telecommunications System (E-UMTS) as an example of a wireless communication system;
FIG. 2A is a block diagram illustrating network structure of an evolved universal mobile telecommunication system (E-UMTS), and FIG. 2B is a block diagram depicting architecture of a typical E-UTRAN and a typical EPC;
FIG. 3 is a diagram showing a control plane and a user plane of a radio interface protocol between a UE and an E-UTRAN based on a 3rd generation partnership project (3GPP) radio access network standard;
FIG. 4 is a diagram of an example physical channel structure used in an E-UMTS system;
FIG. 5 is a block diagram of a communication apparatus according to an embodiment of the present invention
FIG. 6 is an example of default data path for a normal communication;
FIGs. 7 and 8 are examples of data path scenarios for a proximity communication;
FIG.9 is a conceptual diagram illustrating for a Layer 2 Structure for Sidelink;
FIG. 10A is a conceptual diagram illustrating for User-Plane protocol stack for ProSe Direct Communication, and FIG. 10B is Control-Plane protocol stack for ProSe Direct Communication;
FIG. 11 is a diagram for prioritization of two logical channels for three different uplink grants; and
FIG. 12 is a diagram for performing a Logical Channel Prioritization in a D2D communication system according to embodiments of the present invention; and
FIG. 13 is an example for performing a Logical Channel Prioritization in a D2D communication system according to embodiments of the present invention.

### [Detailed Description of Embodiments]

Universal mobile telecommunications system (UMTS) is a 3rd Generation (3G) asynchronous mobile communication system operating in wideband code division multiple access (WCDMA) based on European systems, global system for mobile communications (GSM) and general packet radio services (GPRS). The long-term evolution (LTE) of UMTS is under discussion by the 3rd generation partnership project (3GPP) that standardized UMTS.

The 3GPP LTE is a technology for enabling high-speed packet communications. Many schemes have been proposed for the LTE objective including those that aim to reduce user and provider costs, improve service quality, and expand and improve coverage and system capacity. The 3G LTE requires reduced cost per bit, increased service availability, flexible use of a frequency band, a simple structure, an open interface, and adequate power consumption of a terminal as an upper-level requirement.

Hereinafter, structures, operations, and other features of the present invention will be readily understood from the embodiments of the present invention, examples of which are illustrated in the accompanying drawings. Embodiments described later are examples in which technical features of the present invention are applied to a 3GPP system.

Although the embodiments of the present invention are described in the context of a long term evolution (LTE) system and a LTE-advanced (LTE-A) system in the present specification, they are purely exemplary. Therefore, the embodiments of the present invention are applicable to any other communication system corresponding to the above definition. An exemplary system in which the invention disclosed herein may be implemented is a system compliant with the 3GPP specification TS 36.321 Version 12.6.0. In addition, although the embodiments of the present invention are described based on a frequency division duplex (FDD) scheme in the present specification, the embodiments of the present invention may be easily modified and applied to a half-duplex FDD (H-FDD) scheme or a time division duplex (TDD) scheme.

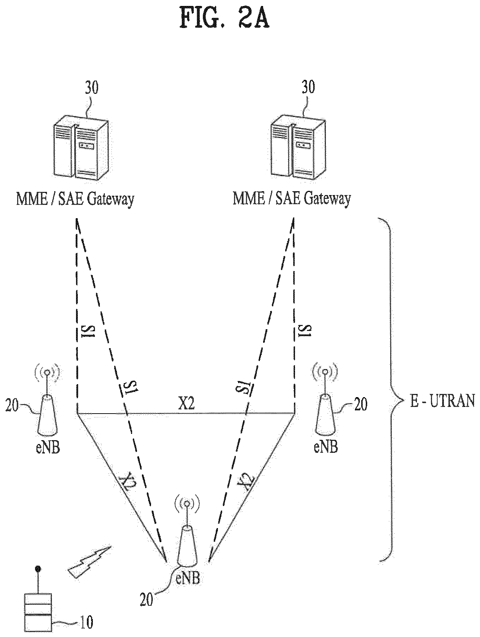

FIG. 2A is a block diagram illustrating network structure of an evolved universal mobile telecommunication system (E-UMTS). The E-UMTS may be also referred to as an LTE system. The communication network is widely deployed to provide a variety of communication services such as voice (VoIP) through IMS and packet data.

As illustrated in FIG. 2A, the E-UMTS network includes an evolved UMTS terrestrial radio access network (E-UTRAN), an Evolved Packet Core (EPC) and one or more user equipment. The E-UTRAN may include one or more evolved NodeB (eNodeB) 20, and a plurality of user equipment (UE) 10 may be located in one cell. One or more E-UTRAN mobility management entity (MME)/system architecture evolution (SAE) gateways 30 may be positioned at the end of the network and connected to an external network.

As used herein, "downlink" refers to communication from eNodeB 20 to UE 10, and "uplink" refers to communication from the UE to an eNodeB. UE 10 refers to communication equipment carried by a user and may be also referred to as a mobile station (MS), a user terminal (UT), a subscriber station (SS) or a wireless device.

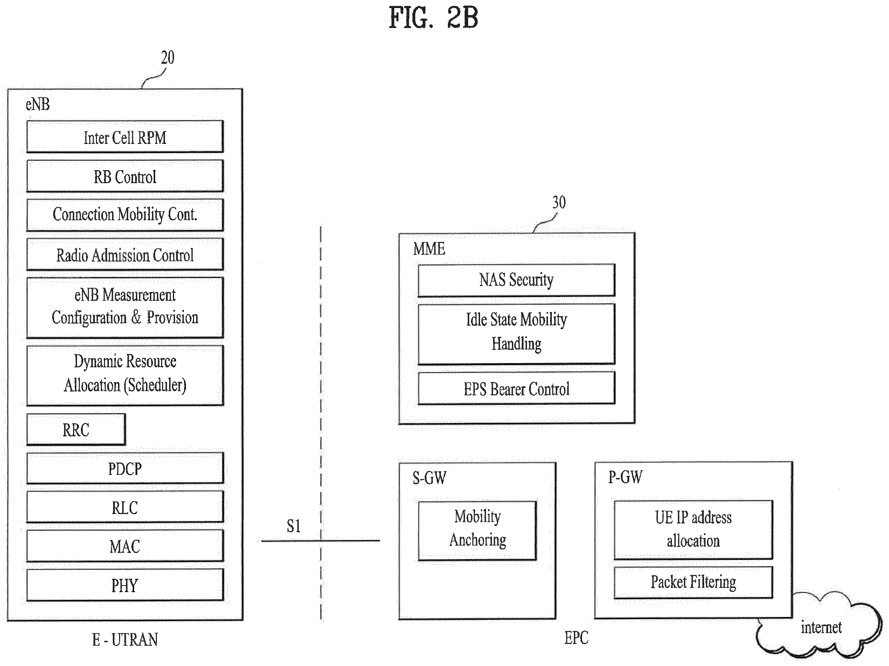

FIG. 2B is a block diagram depicting architecture of a typical E-UTRAN and a typical EPC.

As illustrated in FIG. 2B, an eNodeB 20 provides end points of a user plane and a control plane to the UE 10. MME/SAE gateway 30 provides an end point of a session and mobility management function for UE 10. The eNodeB and MME/SAE gateway may be connected via an S1 interface.

The eNodeB 20 is generally a fixed station that communicates with a UE 10, and may also be referred to as a base station (BS) or an access point. One eNodeB 20 may be deployed per cell. An interface for transmitting user traffic or control traffic may be used between eNodeBs 20.

The MME provides various functions including NAS signaling to eNodeBs 20, NAS signaling security, AS Security control, Inter CN node signaling for mobility between 3GPP access networks, Idle mode UE Reachability (including control and execution of paging retransmission), Tracking Area list management (for UE in idle and active mode), PDN GW and Serving GW selection, MME selection for handovers with MME change, SGSN selection for handovers to 2G or 3G 3GPP access networks, Roaming, Authentication, Bearer management functions including dedicated bearer establishment, Support for PWS (which includes ETWS and CMAS) message transmission. The SAE gateway host provides assorted functions including Per-user based packet filtering (by e.g. deep packet inspection), Lawful Interception, UE IP address allocation, Transport level packet marking in the downlink, UL and DL service level charging, gating and rate enforcement, DL rate enforcement based on APN-AMBR. For clarity MME/SAE gateway 30 will be referred to herein simply as a "gateway," but it is understood that this entity includes both an MME and an SAE gateway.

A plurality of nodes may be connected between eNodeB 20 and gateway 30 via the S1 interface. The eNodeBs 20 may be connected to each other via an X2 interface and neighboring eNodeBs may have a meshed network structure that has the X2 interface.

As illustrated, eNodeB 20 may perform functions of selection for gateway 30, routing toward the gateway during a Radio Resource Control (RRC) activation, scheduling and transmitting of paging messages, scheduling and transmitting of Broadcast Channel (BCCH) information, dynamic allocation of resources to UEs 10 in both uplink and downlink, configuration and provisioning of eNodeB measurements, radio bearer control, radio admission control (RAC), and connection mobility control in LTE_ACTIVE state. In the EPC, and as noted above, gateway 30 may perform functions of paging origination, LTE-IDLE state management, ciphering of the user plane, System Architecture Evolution (SAE) bearer control, and ciphering and integrity protection of Non-Access Stratum (NAS) signaling.

The EPC includes a mobility management entity (MME), a serving-gateway (S-GW), and a packet data network-gateway (PDN-GW). The MME has information about connections and capabilities of UEs, mainly for use in managing the mobility of the UEs. The S-GW is a gateway having the E-UTRAN as an end point, and the PDN-GW is a gateway having a packet data network (PDN) as an end point.

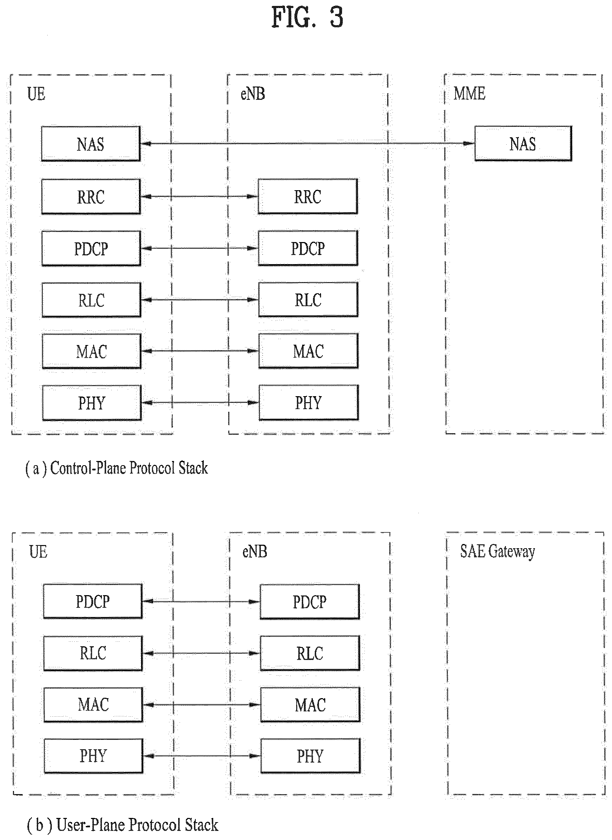

FIG. 3 is a diagram showing a control plane and a user plane of a radio interface protocol between a UE and an E-UTRAN based on a 3GPP radio access network standard. The control plane refers to a path used for transmitting control messages used for managing a call between the UE and the E-UTRAN. The user plane refers to a path used for transmitting data generated in an application layer, e.g., voice data or Internet packet data.

A physical (PHY) layer of a first layer provides an information transfer service to a higher layer using a physical channel. The PHY layer is connected to a medium access control (MAC) layer located on the higher layer via a transport channel. Data is transported between the MAC layer and the PHY layer via the transport channel. Data is transported between a physical layer of a transmitting side and a physical layer of a receiving side via physical channels. The physical channels use time and frequency as radio resources. In detail, the physical channel is modulated using an orthogonal frequency division multiple access (OFDMA) scheme in downlink and is modulated using a single carrier frequency division multiple access (SC-FDMA) scheme in uplink.

The MAC layer of a second layer provides a service to a radio link control (RLC) layer of a higher layer via a logical channel. The RLC layer of the second layer supports reliable data transmission. A function of the RLC layer may be implemented by a functional block of the MAC layer. A packet data convergence protocol (PDCP) layer of the second layer performs a header compression function to reduce unnecessary control information for efficient transmission of an Internet protocol (IP) packet such as an IP version 4 (IPv4) packet or an IP version 6 (IPv6) packet in a radio interface having a relatively small bandwidth.

A radio resource control (RRC) layer located at the bottom of a third layer is defined only in the control plane. The RRC layer controls logical channels, transport channels, and physical channels in relation to configuration, re-configuration, and release of radio bearers (RBs). An RB refers to a service that the second layer provides for data transmission between the UE and the E-UTRAN. To this end, the RRC layer of the UE and the RRC layer of the E-UTRAN exchange RRC messages with each other.

One cell of the eNB is set to operate in one of bandwidths such as 1.25, 2.5, 5, 10, 15, and 20 MHz and provides a downlink or uplink transmission service to a plurality of UEs in the bandwidth. Different cells may be set to provide different bandwidths.

Downlink transport channels for transmission of data from the E-UTRAN to the UE include a broadcast channel (BCH) for transmission of system information, a paging channel (PCH) for transmission of paging messages, and a downlink shared channel (SCH) for transmission of user traffic or control messages. Traffic or control messages of a downlink multicast or broadcast service may be transmitted through the downlink SCH and may also be transmitted through a separate downlink multicast channel (MCH).

Uplink transport channels for transmission of data from the UE to the E-UTRAN include a random access channel (RACH) for transmission of initial control messages and an uplink SCH for transmission of user traffic or control messages. Logical channels that are defined above the transport channels and mapped to the transport channels include a broadcast control channel (BCCH), a paging control channel (PCCH), a common control channel (CCCH), a multicast control channel (MCCH), and a multicast traffic channel (MTCH).

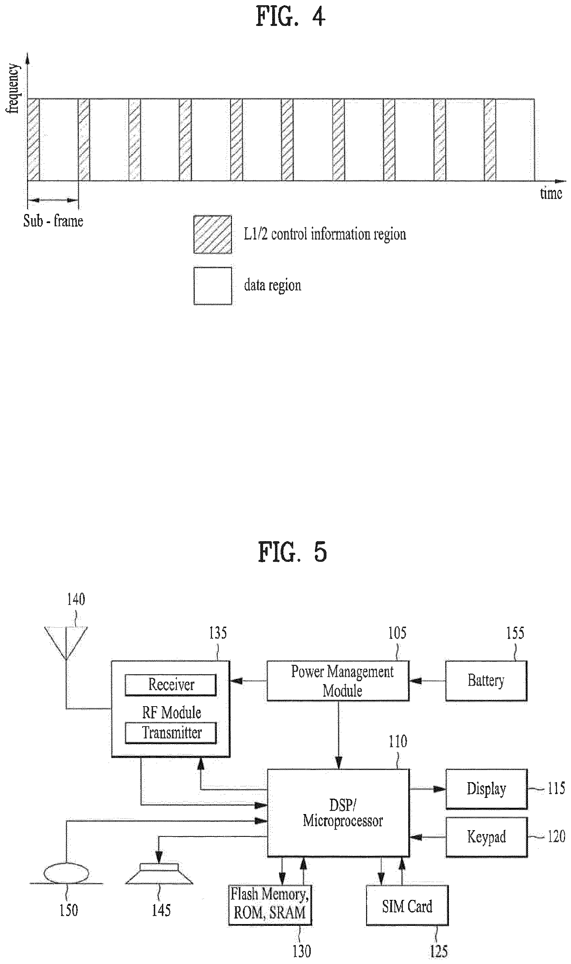

FIG. 4 is a view showing an example of a physical channel structure used in an E-UMTS system. A physical channel includes several subframes on a time axis and several subcarriers on a frequency axis. Here, one subframe includes a plurality of symbols on the time axis. One subframe includes a plurality of resource blocks and one resource block includes a plurality of symbols and a plurality of subcarriers. In addition, each subframe may use certain subcarriers of certain symbols (e.g., a first symbol) of a subframe for a physical downlink control channel (PDCCH), that is, an L1/L2 control channel. In FIG. 4, an L1/L2 control information transmission area (PDCCH) and a data area (PDSCH) are shown. In one embodiment, a radio frame of 10 ms is used and one radio frame includes 10 subframes. In addition, one subframe includes two consecutive slots. The length of one slot may be 0.5 ms. In addition, one subframe includes a plurality of OFDM symbols and a portion (e.g., a first symbol) of the plurality of OFDM symbols may be used for transmitting the L1/L2 control information. A transmission time interval (TTI) which is a unit time for transmitting data is 1ms.

A base station and a UE mostly transmit/receive data via a PDSCH, which is a physical channel, using a DL-SCH which is a transmission channel, except a certain control signal or certain service data. Information indicating to which UE (one or a plurality of UEs) PDSCH data is transmitted and how the UE receive and decode PDSCH data is transmitted in a state of being included in the PDCCH.

For example, in one embodiment, a certain PDCCH is CRC-masked with a radio network temporary identity (RNTI) "A" and information about data is transmitted using a radio resource "B" (e.g., a frequency location) and transmission format information "C" (e.g., a transmission block size, modulation, coding information or the like) via a certain subframe. Then, one or more UEs located in a cell monitor the PDCCH using its RNTI information. And, a specific UE with RNTI "A" reads the PDCCH and then receive the PDSCH indicated by B and C in the PDCCH information.

FIG. 5 is a block diagram of a communication apparatus according to an embodiment of the present invention.

The apparatus shown in FIG. 5 can be a user equipment (UE) and/or eNB adapted to perform the above mechanism, but it can be any apparatus for performing the same operation.

As shown in FIG. 5, the apparatus may comprises a DSP/microprocessor (110) and RF module (transmiceiver; 135). The DSP/microprocessor (110) is electrically connected with the transciver (135) and controls it. The apparatus may further include power management module (105), battery (155), display (115), keypad (120), SIM card (125), memory device (130), speaker (145) and input device (150), based on its implementation and designer's choice.

Specifically, FIG. 5 may represent a UE comprising a receiver (135) configured to receive a request message from a network, and a transmitter (135) configured to transmit the transmission or reception timing information to the network. The receiver and the transmitter can constitute the transceiver (135). The UE further comprises a processor (110) connected to the transceiver (135: receiver and transmitter).

Also, FIG. 5 may represent a network apparatus comprising a transmitter (135) configured to transmit a request message to a UE and a receiver (135) configured to receive the transmission or reception timing information from the UE. These transmitter and receiver may constitute the transceiver (135). The network further comprises a processor (110) connected to the transmitter and the receiver. This processor (110) may be configured to calculate latency based on the transmission or reception timing information.

Recently, Proximity-based Service (ProSe) has been discussed in 3GPP. The ProSe enables different UEs to be connected (directly) each other (after appropriate procedure(s), such as authentication), through eNB only (but not further through Serving Gateway (SGW)/ Packet Data Network Gateway (PDN-GW, PGW)), or through SGW/PGW. Thus, using the ProSe, device to device direct communication can be provided, and it is expected that every devices will be connected with ubiquitous connectivity. Direct communication between devices in a near distance can lessen the load of network. Recently, proximity-based social network services have come to public attention, and new kinds of proximity-based applications can be emerged and may create new business market and revenue. For the first step, public safety and critical communication are required in the market. Group communication is also one of key components in the public safety system. Required functionalities are: Discovery based on proximity, Direct path communication, and Management of group communications.

Use cases and scenarios are for example: i) Commercial/social use, ii) Network offloading, iii) Public Safety, iv) Integration of current infrastructure services, to assure the consistency of the user experience including reachability and mobility aspects, and v) Public Safety, in case of absence of EUTRAN coverage (subject to regional regulation and operator policy, and limited to specific public-safety designated frequency bands and terminals)

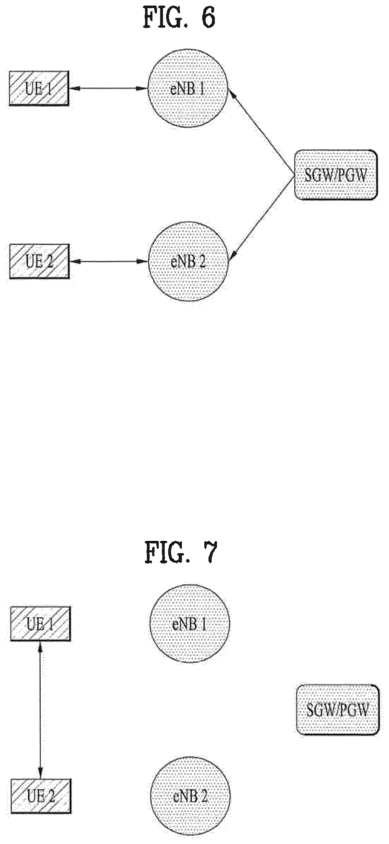

FIG. 6 is an example of default data path for communication between two UEs. With reference to FIG. 6, even when two UEs (e.g., UE1, UE2) in close proximity communicate with each other, their data path (user plane) goes via the operator network. Thus a typical data path for the communication involves eNB(s) and/or Gateway(s) (GW(s)) (e.g., SGW/PGW).

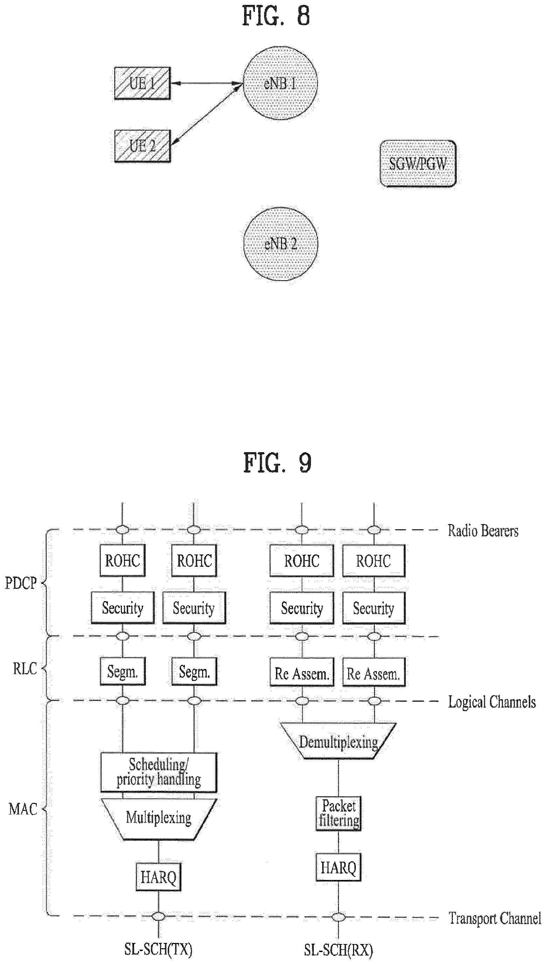

FIGs. 7 and 8 are examples of data path scenarios for a proximity communication. If wireless devices (e.g., UE1, UE2) are in proximity of each other, they may be able to use a direct mode data path (FIG. 7) or a locally routed data path (FIG. 8). In the direct mode data path, wireless devices are connected directly each other (after appropriate procedure(s), such as authentication), without eNB and SGW/PGW. In the locally routed data path, wireless devices are connected each other through eNB only.

FIG. 9 is a conceptual diagram illustrating for a Layer 2 structure for Sidelink.

Sidelink communication is a mode of communication whereby UEs can communicate with each other directly over the PC5 interface. This communication mode is supported when the UE is served by E-UTRAN and when the UE is outside of E-UTRA coverage. Only those UEs authorized to be used for public safety operation can perform sidelink communication.

In order to perform synchronization for out of coverage operation UE(s) may act as a synchronization source by transmitting SBCCH and a synchronization signal. SBCCH carries the most essential system information needed to receive other sidelink channels and signals. SBCCH along with a synchronization signal is transmitted with a fixed periodicity of 40ms. When the UE is in network coverage, the contents of SBCCH are derived from the parameters signalled by the eNB. When the UE is out of coverage, if the UE selects another UE as a synchronization reference, then the content of SBCCH is derived from the received SBCCH; otherwise UE uses pre-configured parameters. SIB 18 provides the resource information for synchronization signal and SBCCH transmission. There are two pre-configured subframes every 40ms for out of coverage operation. UE receives synchronization signal and SBCCH in one subframe and transmit synchronization signal and SBCCH on another subframe if UE becomes synchronization source based on defined criterion.

UE performs sidelink communication on subframes defined over the duration of Sidelink Control period. The Sidelink Control period is the period over which resources allocated in a cell for sidelink control information and sidelink data transmissions occur. Within the Sidelink Control period the UE sends sidelink control information followed by sidelink data. Sidelink control information indicates a Layer 1 ID and characteristics of the transmissions (e.g. MCS, location of the resource(s) over the duration of Sidelink Control period, timing alignment).

The UE performs transmission and reception over Uu and PC5 with the following decreasing priority order:
- Uu transmission/reception (highest priority);
- PC5 sidelink communication transmission/reception;
- PC5 sidelink discovery announcement/monitoring (lowest priority).

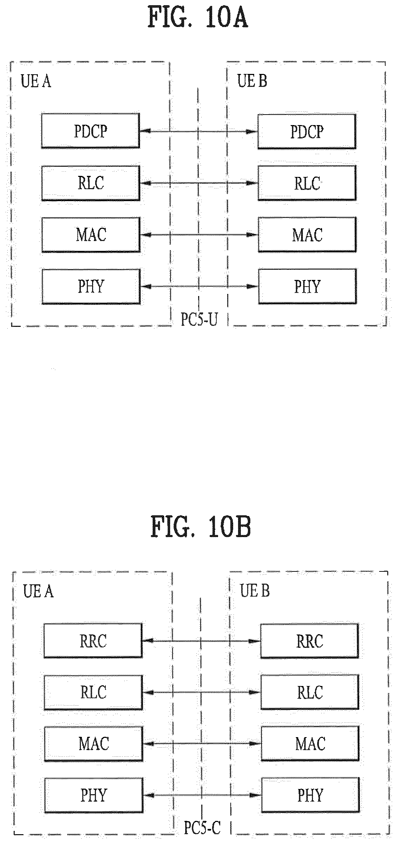

FIG. 10A is a conceptual diagram illustrating for User-Plane protocol stack for ProSe Direct Communication, and FIG. 10B is Control-Plane protocol stack for ProSe Direct Communication.

FIG. 10A shows the protocol stack for the user plane, where PDCP, RLC and MAC sublayers (terminate at the other UE) perform the functions listed for the user plane (e.g. header compression, HARQ retransmissions). The PC5 interface consists of PDCP, RLC, MAC and PHY as shown in FIG. 10A.

User plane details of ProSe Direct Communication: i) there is no HARQ feedback for sidelink communication, ii) RLC UM is used for sidelink communication, iii) RLC UM is used for sidelink communication, iv) a receiving RLC UM entity used for sidelink communication does not need to be configured prior to reception of the first RLC UMD PDU, and v) ROHC Unidirectional Mode is used for header compression in PDCP for sidelink communication.

A UE may establish multiple logical channels. LCID included within the MAC subheader uniquely identifies a logical channel within the scope of one Source Layer-2 ID and ProSe Layer-2 Group ID combination. Parameters for logical channel prioritization are not configured. The Access stratum (AS) is provided with the PPPP of protocol data unit transmitted over PC5 interface by higher layer. There is a PPPP associated with each logical channel.

SL-RNTI is an unique identification used for ProSe Direct Communication Scheduling.

The Source Layer-2 ID identifies the sender of the data in sidelink communication. The Source Layer-2 ID is 24 bits long and is used together with Destination Layer-2 ID and LCID for identification of the RLC UM entity and PDCP entity in the receiver.

The destination Layer-2 ID identifies the target of the data in sidelink communication. The Destination Layer-2 ID is 24 bits long and is split in the MAC layer into two bit strings: i) One bit string is the LSB part (8 bits) of Destination Layer-2 ID and forwarded to physical layer as Group Destination ID. This identifies the target of the intended data in sidelink control information and is used for filtering of packets at the physical layer. And ii) Second bit string is the MSB part (16 bits) of the Destination Layer-2 ID and is carried within the MAC header. This is used for filtering of packets at the MAC layer.

No Access Stratum signalling is required for group formation and to configure Source Layer-2 ID, Destination Layer-2 ID and Group Destination ID in the UE. These identities are either provided by higher layer or derived from identities provided by higher layer. In case of groupcast and broadcast, the ProSe UE ID provided by higher layer is used directly as the Source Layer-2 ID and the ProSe Layer-2 Group ID provided by higher layer is used directly as the Destination Layer-2 ID in the MAC layer. In case of one-to-one communications, higher layer provides Source Layer-2 ID and Destination Layer-2 ID.

FIG. 10B shows the protocol stack for the control plane.

A UE does not establish and maintain a logical connection to receiving UEs prior to one-to-many a sidelink communication. Higher layer establish and maintain a logical connection for one-to-one sidelink communication including ProSe UE-to-Network Relay operation.

The Access Stratum protocol stack for SBCCH in the PC5 interface consists of RRC, RLC, MAC and PHY as shown below in FIG. 10B.

The PPPP is a ProSe Per-Packet Priority. The ProSe Per-Packet Priority is summarized as follows:
i) a single UE shall be able to transmit packets of different priorities on PC5, ii) the UE upper layers provide to the access stratum a ProSe Per Packet Priority from a range of possible values, iii) the ProSe Per Packet Priority is used to support preferential transmission of packets both intra-UE and across different UEs, iv) the support of 8 priority levels for the ProSe Per Packet Priority should be sufficient, v) the ProSe Per Packet Priority applies to all PC5 traffic, and vi) the ProSe Per Packet Priority is independent of the layer-2 destination of the transmission.

From the above summary, it seems that SA2 think ProSe packet prioritization based on PPP is very important and should be supported in PC5 interface in any case. Keeping this observation in mind, we explain how the LCP procedures should be changed from Rel-12.

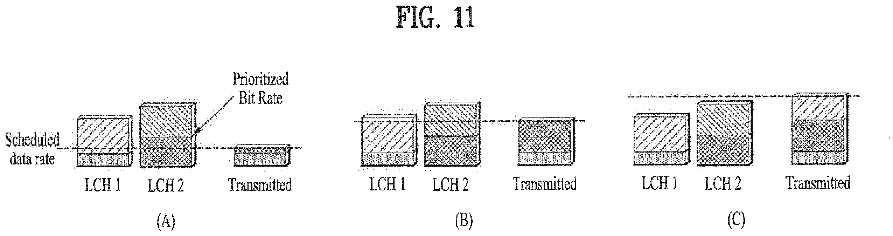

FIG. 11 is a diagram for prioritization of two logical channels for three different uplink grants.

Multiple logical channels of different priorities can be multiplexed into the same transport block using the same MAC multiplexing functionality as in the downlink. However, unlike the downlink case, where the prioritization is under control of the scheduler and up to the implementation, the uplink multiplexing is done according to a set of well-defined rules in the terminal as a scheduling grant applies to a specific uplink carrier of a terminal, not to a specific radio bearer within the terminal. Using radio-bearer-specific scheduling grants would increase the control signaling overhead in the downlink and hence per-terminal scheduling is used in LTE.

The simplest multiplexing rule would be to serve logical channels in strict priority order. However, this may result in starvation of lower-priority channels; all resources would be given to the high-priority channel until its transmission buffer is empty. Typically, an operator would instead like to provide at least some throughput for low-priority services as well. Therefore, for each logical channel in an LTE terminal, a prioritized data rate is configured in addition to the priority value. The logical channels are then served in decreasing priority order up to their prioritized data rate (Prioritized Bit Rate, PRB), which avoids starvation as long as the scheduled data rate is at least as large as the sum of the prioritized data rates. Beyond the prioritized bit rates, channels are served in strict priority order until the grant is fully exploited or the buffer is empty. This is illustrated in FIG. 11.

For PDU(s) associated with one SCI, MAC shall consider only logical channels with same Source Layer-2 ID-Destination Layer-2 ID pairs.

The Logical Channel Prioritization procedure is applied when a new transmission is performed.

The UE shall perform the following Logical Channel Prioritization procedure when a new transmission is performed. The UE shall allocate resources to the sidelink logical channels according to the following rules: i) the UE should not segment an RLC SDU (or partially transmitted SDU) if the whole SDU (or partially transmitted SDU) fits into the remaining resources; ii) if the UE segments an RLC SDU from the sidelink logical channel, it shall maximize the size of the segment to fill the grant as much as possible; iii) the UE should maximise the transmission of data; and iv) if the MAC entity is given an sidelink grant size that is equal to or larger than 10 bytes while having data available for transmission, the MAC entity shall not transmit only padding.

In Rel-12 ProSe, a MAC entity generates a PDU for one SCI by considering only sidelink logical channels for one ProSe Group (or ProSe Destination). In detail, upon receiving a SL grant, the MAC entity performs LCP operation for the sidelink logical channels of one ProSe Group by assigning a priority to a sidelink logical channel by UE implementation. Note that selecting the ProSe Group and assigning the priority to the sidelink logical channel are all up to UE implementation.

In Rel-13 ProSe, Per Packet Priority is defined for every packet, which is used as the mechanism to perform prioritization for ProSe Communication. In order to consider PPP in ProSe Communication, it is likely that PPP would be considered in BSR operation, i.e., the MAC entity prioritizes the Buffer Size (BS) of data belonging to a higher priority of LCG or ProSe Group, where the priority of LCG/ProSe Group is related to PPP. Then, an eNB would provide sidelink grant by considering the priority of LCG or ProSe Group.

This implies that when the MAC entity receives SL grant in response to the BSR, the MAC entity also needs to perform LCP operation by selecting the ProSe Group considering PPP, which is not possible so far.

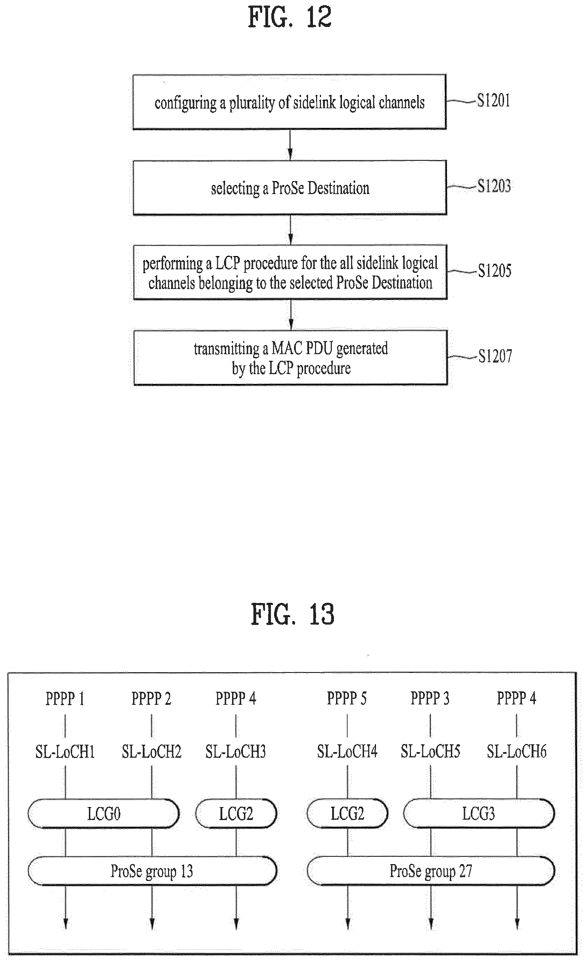

FIG. 12 is a diagram for performing a Logical Channel Prioritization in a D2D communication system according to embodiments of the present invention.

It is assumed that the UE is transmitting data to at least one ProSe Group. The ProSe Group refers the ProSe Destination.

It is invented that, when a MAC entity generates a MAC PDU, the MAC entity selects a ProSe Group which includes a SL-LoCH having the highest SL-LoCH Priority or as in an example, a ProSe Group which has the highest Group Priority or as in another example, a ProSe Group which includes LCG having the highest LCG Priority. After selecting the ProSe Group, the UE performs LCP procedure for the all SL-LoCHs belonging to the selected ProSe Group.

The UE configures a plurality of sidelink logical channels (S1201). One of the plurality of sidelink logical channels belongs to a LCG, and one or more LCGs belong to a ProSe Destination. Each of the plurality of sidelink logical channels has an associated priority which is the PPPP (ProSe Per-Packet Priority).

The Access stratum (AS) is provided with the PPPP of protocol data unit transmitted over PC5 interface by higher layer. It is assumed that the Sidelink Logical Channel Priority (SL-LoCH Priority) refers the PPPP mapped to the SL-LoCH, a Group Priority refers the highest PPPP of data belonging to a ProSe Group among the PPPs of data belonging to the ProSe Group, and a LCG Priority refers the highest PPPP of data belonging to a LCG of a ProSe Group among the PPPPs of data belonging to the LCG of the ProSe Group.

The PPPP is defined per data, wherein data with different PPPPs can be transmitted to one ProSe Destination. Preferably, the data refers PDCP SDU, and PPPP is provided by the upper layer when the UE receives the packet from the upper layer.

Preferably, a radio bearer is configured per ProSe Group and per PPPP, and a sidelink logical channel is mapped to a PPPP.

Preferably, a LCG is defined per ProSe Destination, wherein sidelink logical channel for ProSe Destination can be mapped to one of the LCGs defined for that ProSe Destination based on PPPP.

When the MAC entity performs LCP procedure in order to generate one MAC PDU, the MAC entity compares the SL-LoCH Priority of SL-LoCH having data available for transmission, and the MAC entity selects a ProSe Group including SL-LoCHs having the highest SL-LoCH Priority among the SL-LoCH Priority of the all SL-LoCHs (S 1203).

Or in an example, if the MAC entity compares Group Priority of ProSe Groups having data available for transmission, the MAC entity selects a ProSe Group having the highest Group Priority among the Group Priorities of the all ProSe Groups, or as in another example, if the MAC entity compares LCG Priority of LCGs having data available for transmission, the MAC entity selects a ProSe Group including the LCG having the highest LCG Priority among the LCG Priorities of the all LCGs.

For the all SL-LoCHs belonging to the selected ProSe Group, the MAC entity performs LCP procedure (S1205).

For the SL-LoCHs not belonging to the selected ProSe Group, the MAC entity doesn't perform LCP procedure.

When the MAC entity performs LCP procedures for the all SL-LoCHs belonging to the selected ProSe Group, the MAC entity considers the SL-LoCH Priority of SL-LoCH, i.e., the MAC entity generates the MAC PDU by including the data of the SL-LoCH in decreasing order of SL-LoCH Priority.

The MAC entity generates a MAC PDU by the LCP procedures, and transmits it (S 1207).

In summary, the MAC entity shall perform the following Logical Channel Prioritization procedure for each SCI transmitted in an SC period.

The MAC entity shall allocate resources to the sidelink logical channels in the following steps:
i) The MAC entity selects a ProSe Destination, not previously selected for this SC period, having the sidelink logical channel with the highest priority, among the sidelink logical channels having data available for transmission (Step 1).
ii) The MAC entity allocates resources to the sidelink logical channel with the highest priority, among the sidelink logical channels belonging to the selected ProSe Destination and having data available for transmission (Step 2).
iii) If any resources remain, sidelink logical channels belonging to the selected ProSe Destination are served in decreasing order of priority until either the data for the sidelink logical channel(s) or the SL grant is exhausted, whichever comes first. Sidelink logical channels configured with equal priority should be served equally (Step 3).

FIG. 13 is an example for performing a Logical Channel Prioritization in a D2D communication system according to embodiments of the present invention.

It is assumed that the UE is configured with six sidelink logical channels, SL-LoCH1 with SL-LoCH Priority = PPPP1, SL-LoCH2 with SL-LoCH Priority = PPPP2, SL-LoCH3 with SL-LoCH Priority = PPPP4, SL-LoCH4 with SL-LoCH Priority = PPPP5, SL-LoCH5 with SL-LoCH Priority = PPPP3, and SL-LoCH6 with SL-LoCH Priority = PPPP4.

As mentioned above, the PPPP is a ProSe Packet Per Priority.

For ProSe Group 13, SL-LoCH1 and SL-LoCH2 belong to LCG0 while SL-LoCH3 belongs to LCG2.

For ProSe Group 27, SL-LoCH4 belongs to LCG2 while SL-LoCH5 and SL-LoCH6 belong to LCG3.

The MAC entity receives a SL grant.

When the MAC entity performs LCP procedure in order to generate a MAC PDU, the MAC entity compares SL-LoCH Priority of SL-LoCHs having data available for transmission, i.e, SL-LoCH1, SL-LoCH2, SL-LoCH3, SL-LoCH4, SL-LoCH5, and SL-LoCH6.

The MAC entity selects ProSe Group 13 because SL-LoCH1 has the highest SL-LoCH Priority =PPPP1 and SL-LoCH1 belongs to the ProSe Group 13.

The MAC entity performs LCP procedure for the SL-LoCHs belonging to the ProSe Group 13, i.e., for SL-LoCH1, SL-LoCH2, and SL-LoCH3.

As a result of LCP, the MAC entity transmits all data of SL-LoCH1 and SL-LoCH2 but can't transmit all data of SL-LoCH3 because the SL grant is not enough.

The MAC entity receives another SL grant.

When the MAC entity performs LCP procedure in order to generate a MAC PDU, the MAC entity compares SL-LoCH Priority of SL-LoCHs having data available for transmission, i.e, SL-LoCH3, SL-LoCH4, SL-LoCH5, and SL-LoCH6.

The MAC entity selects ProSe Group 27 because SL-LoCH5 has the highest SL-LoCH Priority =PPPP3 and SL-LoCH5 belongs to the ProSe Group 27.

The MAC entity performs LCP procedure for the SL-LoCHs belonging to the ProSe Group 27, i.e., for SL-LoCH4, SL-LoCH5, and SL-LoCH6.

The embodiments of the present invention described herein below are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features.
Operation orders described in embodiments of the present invention may be rearranged. Some constructions of any one embodiment may be included in another embodiment and may be replaced with corresponding constructions of another embodiment.
In the embodiments of the present invention, a specific operation described as performed by the BS may be performed by an upper node of the BS. Namely, it is apparent that, in a network comprised of a plurality of network nodes including a BS, various operations performed for communication with an MS may be performed by the BS, or network nodes other than the BS. The term 'eNB' may be replaced with the term 'fixed station', 'Node B', 'Base Station (BS)', 'access point', etc.
The above-described embodiments may be implemented by various means, for example, by hardware, firmware, software, or a combination thereof.
In a hardware configuration, the method according to the embodiments of the present invention may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, or microprocessors.
In a firmware or software configuration, the method according to the embodiments of the present invention may be implemented in the form of modules, procedures, functions, etc. performing the above-described functions or operations. Software code may be stored in a memory unit and executed by a processor. The memory unit may be located at the interior or exterior of the processor and may transmit and receive data to and from the processor via various known means.
While the above-described method has been described centering on an example applied to the 3GPP LTE system, the present invention is applicable to a variety of wireless communication systems in addition to the 3GPP LTE system.
Certain exemplary aspects of the present disclosure can be described as follows:
As for conventional technology, reference can be made to 3GPP TS 36.321 Version 12.6.0 (specifically sections 5.14.1.3 and 5.14.1.4 thereof) as well as the 3GPP documents RP-150441 ("Revised WID: Enhanced LTE Device to Device Proximity Services"), S2-152681 ("LS on ProSe Priority determination in ProSe UE-NW Relay"), R2-153024 ("LS reply on ProSe Priorities") and R2-153030 ("LS on usage of ProSe Per-Packet Priority in ProSe UE-Network Relay").
Problems in the conventional technology: In Rel-12 ProSe, a MAC entity generates a PDU for one SCI by considering only sidelink logical channels for one ProSe Group. In detail, upon receiving a SL grant, the MAC entity performs LCP operation for the sidelink logical channels of one ProSe Group by assigning a priority to a sidelink logical channel by UE implementation. Note that selecting the ProSe Group and assigning the priority to the sidelink logical channel are all up to UE implementation.

In Rel-13 ProSe, Per Packet Priority is intended to be defined for every packet, which is used as the mechanism to perform prioritization for ProSe Communication. In order to consider PPP in ProSe Communication, it is likely that PPP would be considered in BSR operation, i.e., the MAC entity prioritizes the Buffer Size (BS) of data belonging to a higher priority of LCG or ProSe Group, where the priority of LCG/ProSe Group is related to PPP. Then, an eNB would provide sidelink grant by considering the priority of LCG or ProSe Group.

This implies that when the MAC entity receives SL grant in response to the BSR, the MAC entity also needs to perform LCP operation by selecting the ProSe Group considering PPP, which is not possible so far.

In the proposed solution,
- Sidelink Logical Channel Priority (SL-LoCH Priority) refers the PPP mapped to the SL-LoCH;
- Group Priority refers the highest PPP of data belonging to a ProSe Group among the PPPs of data belonging to the ProSe Group;
- LCG Priority refers the highest PPP of data belonging to a LCG of a ProSe Group among the PPPs of data belonging to the LCG of the ProSe Group.
It is proposed that, when a MAC entity generates a MAC PDU, the MAC entity selects a ProSe Group which includes a SL-LoCH having the highest SL-LoCH Priority or as in an example, a ProSe Group which has the highest Group Priority or as in another example, a ProSe Group which includes LCG having the highest LCG Priority. After selecting the ProSe Group, the UE performs LCP procedure for the all SL-LoCHs belonging to the selected ProSe Group.
It is assumed that
- The UE is transmitting data to at least one ProSe Group.
   ∘ ProSe Group refers the ProSe Destination.
- PPP is defined per data, wherein data with different PPPs can be transmitted to one ProSe Group.
   ∘ Data refers PDCP SDU.
   ∘ PPP is provided by the upper layer when the UE receives the packet from the upper layer.
- A radio bearer is configured per ProSe Group and per PPP.
- A sidelink logical channel is mapped to a PPP.
- LCG is defined per ProSe Group, wherein sidelink logical channel for ProSe Group can be mapped to one of the LCGs defined for that ProSe Groups based on PPP.
When the MAC entity performs LCP procedure in order to generate one MAC PDU,
- The MAC entity compares the followings:
   ∘ SL-LoCH Priority of SL-LoCH having data available for transmission; or
   ∘ Group Priority of ProSe Groups having data available for transmission; or
   ∘ LCG Priority of LCGs having data available for transmission.
- The MAC entity selects one ProSe Group as follows,
   ∘ The ProSe Group including SL-LoCHs having the highest SL-LoCH Priority among the SL-LoCH Priority of the all SL-LoCHs; or
   ∘ As in an example, The ProSe Group having the highest Group Priority among the Group Priorities of the all ProSe Groups; or
   ∘ As in another example, The ProSe Group including the LCG having the highest LCG Priority among the LCG Priorities of the all LCGs.
- For the all SL-LoCHs belonging to the selected ProSe Group, the MAC entity performs LCP procedure.
   ∘ For the SL-LoCHs not belonging to the selected ProSe Group, the MAC entity doesn't perform LCP procedure.
   ∘ When the MAC entity performs LCP procedures for the all SL-LoCHs belonging to the selected ProSe Group, the MAC entity considers the SL-LoCH Priority of SL-LoCH, i.e., the MAC entity generates the MAC PDU by including the data of the SL-LoCH in decreasing order of SL-LoCH Priority.
In the below, example of the invention is shown:
The UE is configured with six sidelink logical channels, SL-LoCH 1 with SL-LoCH Priority = PPP1, SL-LoCH2 with SL-LoCH Priority = PPP2, SL-LoCH3 with SL-LoCH Priority = PPP4, SL-LoCH4 with SL-LoCH Priority = PPP5, SL-LoCH5 with SL-LoCH Priority = PPP3, and SL-LoCH6 with SL-LoCH Priority = PPP4.
For ProSe Group 13, SL-LoCH1 and SL-LoCH2 belong to LCG0 while SL-LoCH3 belongs to LCG2.
For ProSe Group 27, SL-LoCH4 belongs to LCG2 while SL-LoCH5 and SL-LoCH6 belong to LCG3. 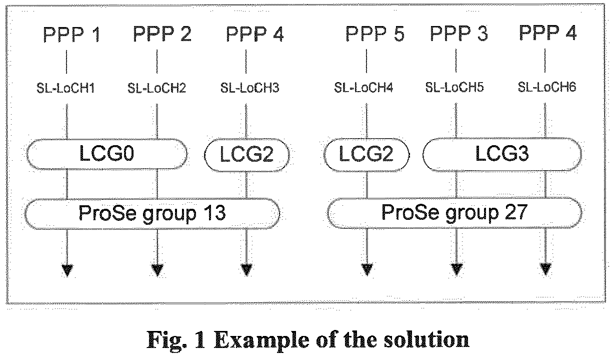
1. The MAC entity receives a SL grant.
2. When the MAC entity performs LCP procedure in order to generate a MAC PDU, the MAC entity compares SL-LoCH Priority of SL-LoCHs having data available for transmission, i.e, SL-LoCH1, SL-LoCH2, SL-LoCH3, SL-LoCH4, SL-LoCH5, and SL-LoCH6.
3. The MAC entity selects ProSe Group 13 because SL-LoCH1 has the highest SL-LoCH Priority =PPP1 and SL-LoCH1 belongs to the ProSe Group 13.
4. The MAC entity performs LCP procedure for the SL-LoCHs belonging to the ProSe Group 13, i.e., for SL-LoCH1, SL-LoCH2, and SL-LoCH3.
5. As a result of LCP, the MAC entity transmits all data of SL-LoCH1 and SL-LoCH2 but can't transmit all data of SL-LoCH3 because the SL grant is not enough.
6. The MAC entity receives another SL grant.
7. When the MAC entity performs LCP procedure in order to generate a MAC PDU, the MAC entity compares SL-LoCH Priority of SL-LoCHs having data available for transmission, i.e, SL-LoCH3, SL-LoCH4, SL-LoCH5, and SL-LoCH6.
8. The MAC entity selects ProSe Group 27 because SL-LoCH5 has the highest SL-LoCH Priority =PPP3 and SL-LoCH5 belongs to the ProSe Group 27.
9. The MAC entity performs LCP procedure for the SL-LoCHs belonging to the ProSe Group 27, i.e., for SL-LoCH4, SL-LoCH5, and SL-LoCH6.

## Claims

1. A method for a user equipment operating in a wireless communication system, the method comprising:
configuring (S1201) a plurality of sidelink logical channels, wherein each of the plurality of sidelink logical channels has an associated priority;
selecting (S1203) a proximity-based services, ProSe, Destination having a sidelink logical channel with a highest priority, among sidelink logical channels having data available for transmission;
performing (S1205) a logical channel prioritization, LCP, procedure for all sidelink logical channels belonging to the selected ProSe Destination; and
transmitting (S1207) a medium access control protocol data unit, MAC PDU, generated by the LCP procedure.

2. The method according to claim 1, wherein the user equipment does not perform the LCP procedure for sidelink logical channels not belonging to the selected ProSe Destination.

3. The method according to any one preceding claim, wherein the user equipment generates the MAC PDU by including data of the sidelink logical channels belonging to the selected ProSe Destination in decreasing order of the priority.

4. The method according to any one preceding claim, wherein each of the plurality of sidelink logical channels belongs to a Logical Channel Group, LCG.

5. A user equipment configured to operate in a wireless communication system, the user equipment comprising:
a radio frequency module (135); and
a processor (110) operably coupled with the radio frequency module (135) and configured to:
configure a plurality of sidelink logical channels, wherein each of the plurality of sidelink logical channels has an associated priority;
select a proximity-based services, ProSe, Destination having a sidelink logical channel with a highest priority, among sidelink logical channels having data available for transmission;
perform a logical channel prioritization, LCP, procedure for all sidelink logical channels belonging to the selected ProSe Destination; and
transmit a medium access control protocol data unit, MAC PDU, generated by the LCP procedure.

6. The user equipment according to claim 5, wherein the processor (110) is configured to not perform the LCP procedure for sidelink logical channels not belonging to the selected ProSe Destination.

7. The user equipment according to claim 5 or 6, wherein the processor (110) is configured to generate the MAC PDU by including data of the sidelink logical channels belonging to the selected ProSe Destination in decreasing order of the priority.

8. The user equipment according to any one of claims 5 to 7, wherein each of the plurality of sidelink logical channels belongs to a Logical Channel Group, LCG.

## Patentansprüche

1. Verfahren für ein Benutzergerät, das in einem drahtlosen Kommunikationssystem betrieben wird, wobei das Verfahren umfasst:
Konfigurieren (S1201) einer Mehrzahl von logischen Nebenstreckenkanälen, wobei jeder aus der Mehrzahl von logischen Nebenstreckenkanälen eine zugeordnete Priorität aufweist;
Auswählen (S1203) eines Ziels für nähebasierte Dienste, ProSe, das einen logischen Nebenstreckenkanal mit einer höchsten Priorität aufweist, unter den logischen Nebenstreckenkanälen, deren Daten für eine Übertragung verfügbar sind;
Durchführen (S1205) einer logischen Kanalpriorisierungs-, LCP, Prozedur für alle logischen Nebenstreckenkanälen, die zu dem ausgewählten ProSe-Ziel gehören; und
Senden (S1207) einer Medienzugriffssteuerprotokolldateneinheit, MAC-PDU, die von der LCP-Prozedur erzeugt wird.

2. Verfahren nach Anspruch 1, wobei das Benutzergerät die LCP-Prozedur für logische Nebenstreckenkanäle, die nicht zu dem ausgewählten ProSe-Ziel gehören, nicht durchführt.

3. Verfahren nach einem der vorhergehenden Ansprüche, wobei das Benutzergerät die MAC-PDU erzeugt, indem Daten der logischen Nebenstreckenkanäle, die zu dem ausgewählten ProSe-Ziel gehören, in absteigender Reihenfolge der Priorität einbezogen werden.

4. Verfahren nach einem der vorhergehenden Ansprüche, wobei jeder aus der Mehrzahl von logischen Nebenstreckenkanälen zu einer logischen Kanalgruppe, LCG, gehört.

5. Benutzergerät, das eingerichtet ist, um in einem drahtlosen Kommunikationssystem betrieben zu werden, wobei das Benutzergerät umfasst:
ein Funkfrequenzmodul (135); und
einen Prozessor (110), der betriebsmäßig mit dem Funkfrequenzmodul (135) gekoppelt ist und eingerichtet ist zum:
Konfigurieren einer Mehrzahl von logischen Nebenstreckenkanälen, wobei jeder aus der Mehrzahl von logischen Nebenstreckenkanälen eine zugeordnete Priorität aufweist;
Auswählen eines Ziels für nähebasierte Dienste, ProSe, das einen logischen Nebenstreckenkanal mit einer höchsten Priorität aufweist, unter logischen Nebenstreckenkanälen, deren Daten für eine Übertragung verfügbar sind;
Durchführen einer logischen Kanalpriorisierungs-, LCP, Prozedur für alle logischen Nebenstreckenkanäle, die zu dem ausgewählten ProSe-Ziel gehören; und
Senden einer Medienzugriffssteuerprotokolldateneinheit, MAC-PDU, die von der LCP-Prozedur erzeugt wird.

6. Benutzergerät nach Anspruch 5, wobei der Prozessor (110) so konfiguriert ist, dass er die LCP-Prozedur für logische Nebenstreckenkanäle, die nicht zu dem ausgewählten ProSe-Ziel gehören, nicht durchführt.

7. Benutzergerät nach Anspruch 5 oder 6, wobei der Prozessor (110) konfiguriert ist zum Erzeugen der MAC-PDU, indem Daten der logischen Nebenstreckenkanäle, die zu dem ausgewählten ProSe-Ziel gehören, in absteigender Reihenfolge der Priorität einbezogen werden.

8. Benutzergerät nach einem der Ansprüche 5 bis 7, wobei jeder aus der Mehrzahl von logischen Nebenstreckenkanälen zu einer logischen Kanalgruppe, LCG, gehört.

## Revendications

1. Procédé pour un équipement utilisateur fonctionnant dans un système de communication sans fil, le procédé consistant à:
configurer (S1201) une pluralité de canaux logiques de liaison latérale, chacun des canaux logiques de liaison latérale ayant une priorité associée ;
sélectionner (S1203) une destination de services de proximité, ProSe, ayant un canal logique de liaison latérale ayant une priorité élevée, parmi les canaux logiques de liaison latérale ayant des données disponibles pour la transmission ;
mettre en oeuvre (S1205) une procédure de hiérarchisation de canaux logiques, LCP, pour tous les canaux logiques de liaison latérale appartenant à la destination ProSe sélectionnée ; et
transmettre (S1207) une unité de données de protocole de contrôle d'accès au support, MAC PDU, générée par la procédure LCP.

2. Procédé selon la revendication 1, l'équipement utilisateur ne met pas en oeuvre la procédure LCP pour les canaux logiques de liaison latérale n'appartenant pas à la destination ProSe sélectionnée.

3. Procédé selon l'une quelconque des revendications précédentes, l'équipement utilisateur générant la MAC PDU en incluant les données des données des canaux logiques de liaison latérale appartenant à la destination ProSe sélectionnée en réduisant l'ordre de la priorité.

4. Procédé selon l'une quelconque des revendications précédentes, chacun des canaux logiques de liaison latérale appartenant à un groupe de canaux logiques, LCG.

5. Equipement utilisateur configuré pour fonctionner dans un système de communication sans fil, l'équipement utilisateur comprenant :
un module de radiofréquence (135) ; et
un processeur (110) couplé fonctionnellement avec le module de radiofréquence (135) et configuré pour :
configurer une pluralité de canaux logiques de liaison latérale, chaque canal logique de liaison latérale de la pluralité des canaux logiques de liaison latérale ayant une priorité associée ;
sélectionner une destination de services de proximité, ProSe, ayant un canal logique de liaison latérale ayant une priorité élevée, parmi les canaux logiques de liaison latérale ayant des données disponibles pour la transmission ;
mettre en oeuvre la procédure de hiérarchisation des canaux logiques, LCP, pour tous les canaux logiques de liaison latérale appartenant à la destination ProSe sélectionnée ; et
transmettre une unité de données de protocole de contrôle d'accès au support, MAC PDU, générée par la procédure LCP.

6. Equipement utilisateur selon la revendication 5, le processeur (110) étant configuré pour ne pas mettre en oeuvre la procédure LCP pour les canaux logiques de liaison latérale n'appartenant pas à la destination ProSe sélectionnée.

7. Equipement utilisateur selon la revendication 5 ou la revendication 6, le processeur (110) étant configuré pour générer la MAC PDU en incluant les données des canaux logiques de liaison latérale appartenant à la destination ProSe sélectionnée en réduisant l'ordre de la priorité.

8. Equipement utilisateur selon l'une quelconque des revendications 5 à 7, chaque canal logique de liaison latérale de la pluralité de canaux logiques de liaison latérale appartenant à un groupe de canaux logiques, LCG.
